# EUROPÄISCHE PATENTSCHRIFT

(11) **EP 3 409 092 B1**
(45) Veröffentlichungstag und Bekanntmachung des Hinweises auf die Patenterteilung: **13.05.2020**
(21) Anmeldenummer: 18185942.2
(22) Anmeldetag: 18.08.2016
(51) Int. Cl.: A01C 7/10, A01C 7/04, A01C 7/16

(54) **VEREINZELUNGSVORRICHTUNG FÜR GRANULARES MATERIAL MIT KÖRNERZÄHLER**
SINGULATING DEVICE FOR GRANULAR MATERIAL WITH GRAIN COUNTER
DISPOSITIF DE SINGULATION POUR MATÉRIAU GRANULAIRE COMPRENANT UN COMPTEUR DE GRAINS

(30) Priorität: 26.08.2015 DE 102015114147
(43) Veröffentlichungstag der Anmeldung: 05.12.2018
(62) Teilanmeldung aus: 16184775.1
(73) Patentinhaber: Amazonen-Werke H. Dreyer GmbH & Co. KG, 49205 Hasbergen (DE)
(72) Erfinder: Johannaber, Stefan Jan, 49536 Lienen (DE); Teckemeyer, Stephan, 49504 Lotte (DE); Renger, Stefan, 21029 Hamburg (DE)

(56) Entgegenhaltungen:
- EP-A2- 2 044 828
- US-A1- 2014 182 495
- US-A1- 2015 090 166
- US-B1- 7 726 251

## Beschreibung

Die Erfindung betrifft eine Dosiervorrichtung für granulares Material, insbesondere für Saatgut.

Derartige Vorrichtungen finden in landwirtschaftlichen Sämaschinen Anwendung, um Saatgut in definierten Mengen an Abgabeelemente weiterzuleiten und dann auf einer landwirtschaftlichen Fläche abzulegen. Für bestimmtes Saatgut, beispielsweise Mais, ist es wünschenswert, einzelne Körner in vorherbestimmten Abständen abzulegen. Um das Saatgut zu vereinzeln, verwenden bekannte Dosiervorrichtungen eine mit einer Druckdifferenz beaufschlagbare Vereinzelungstrommel oder Vereinzelungsscheibe. Die Vereinzelungstrommel oder Vereinzelungsscheibe umfasst in Perforationsreihen angeordnete Perforationen, an denen sich das Saatgut anlagern kann, wodurch es zu einer Vereinzelung kommt.

Diese Vereinzelungstechnik ist jedoch nicht zufriedenstellend für Getreide, wie etwa Weizen, Roggen, Gerste, Hafer oder Raps anwendbar. Eine speziell auf einen derartigen Einsatz gerichtete Dosiervorrichtung ist daher aus der DE 10 2012 105 048 A1 bekannt geworden. Diese Dosiervorrichtung umfasst eine in einem Gehäuse konzentrisch rotierende Fördereinrichtung, die annähernd tangential an eine Innenmantelfläche des Gehäuses anschließt. In der Fördereinrichtung sind Taschen gebildet, in denen Körner des Saatguts gedrängt und kreisförmig befördert werden, bis in einem weiteren Gehäusebereich durch eine veränderte Kontur der Innenmantelfläche des Gehäuses und unter Zentrifugalkrafteinflüssen nur jeweils ein einzelnes Korn in der Tasche verbleibt, während überschüssige Körner abgesondert und zur erneuten Förderung in einen ersten Gehäusebereich zurückgeführt werden.

Die Vereinzelungsqualität einer solchen Dosiervorrichtung mit rotierender Fördereinrichtung hängt unter anderem von der Drehzahl der Fördereinrichtung ab. Dies liegt mitunter daran, dass die Dosiervorrichtung häufig über eine volumetrische Vorvereinzelung, beispielsweise einen Verteilerkopf, gespeist wird. In einem Aufnahmebereich der Fördereinrichtung steht daher immer nur eine gewisse Anzahl von Körnern des granularen Materials bereit, die von der Fördermenge des jeweiligen Abgangs des Verteilerkopfes abhängt. Da der Verteilerkopf das Luft-Korn-Gemisch mit einer zufälligen Abstandsverteilung zuführt, unterliegt das Reservoir des granularen Materials im Aufnahmebereich der Fördereinrichtung außerdem gewissen zeitlichen Schwankungen.

Wird die Drehzahl der Fördereinrichtung daher zu hoch eingestellt, kann es zu Fehlstellen kommen, also dazu, dass in gewissen Intervallen keine Körner abgegeben werden. Alternativ, wenn die Drehzahl zu gering eingestellt ist, kann es zu Doppel- und Mehrfachstellen sowie zu Verstopfungen kommen.

Ein Nachteil der oben beschriebenen Vereinzelungstechnik für Getreide ist außerdem, dass die Tasche der Fördereinrichtung an die Korngröße des Saatguts angepasst sein muss. Um eine Vereinzelung zu ermöglichen, muss in jede Tasche genau ein Korn passen. Sind die Taschen zu klein gewählt, kommt es zu Fehlstellen bei der Aussaat, sind die Taschen zu groß ausgebildet, kann es zu Doppel- und Mehrfachstellen kommen. Zur Anpassung an die Korngröße ist die Fördereinrichtung wenigstens teilweise austauschbar gestaltet. Basierend auf einer Messung der Korngröße muss vor Beginn der Arbeiten eine geeignete Fördereinrichtung gewählt werden. Wenn eine ungeeignete Fördereinrichtung gewählt wird kann keine optimale Vereinzelungsqualität erzielt werden.

Aus der US 7,726,251 B1 ist eine Sämaschine mit einer Vielzahl von Reiheneinheiten bekannt. Jede der Reiheneinheiten verfügt über eine Saatgutdosiereinrichtung, eine Saatgutablageeinrichtung und einen Sensor, der geeignet ist, einen Parameter in Bezug auf die Saatgutablage zu erfassen. Eine Antriebssteuerung der Saatgutdosiereinrichtung empfängt ein Indexsignal vom Sensor sowie ein Referenzimpulssignal. Das Verarbeitungssignal der Antriebssteuerung vergleicht das Indexsignal mit dem Referenzsignal. Jede Antriebssteuerung ist selektiv programmierbar, um einen zugehörigen Motor des Dosierantriebs zu steuern, um eine gewünschte Beziehung zwischen dem Indexsignal der Reiheneinheit und dem Referenzsignal zu erzeugen und dadurch die Saatgutablage zwischen zwei oder mehr Reihen zu synchronisieren.

Aufgabe der Erfindung ist es, eine Dosiervorrichtung für granulares Material, insbesondere Saatgut, bereitzustellen, welche es ermöglicht, die Qualität der Dosierung bzw. Vereinzelung zu verbessern. Diese Aufgabe wird durch eine Vorrichtung gemäß Patentanspruch 1 gelöst. Weitere vorteilhafte Ausgestaltungen der Erfindung sind in den abhängigen Ansprüchen angegeben.

Gemäß der Erfindung ist es also vorgesehen, dass die Dosiervorrichtung einen Sensor umfasst, mit dem die Anzahl der Körner des granularen Materials bestimmbar ist, die über die Auslassöffnung aus dem Gehäuse ausgeschleust und an die Abgabeeinrichtung weitergeleitet werden. Die Daten dieses Sensors ermöglichen einen Rückschluss auf die Qualität der Dosierung bzw. Vereinzelung durch die Dosiervorrichtung. Basierend darauf kann dann die Drehzahl der Fördereinrichtung optimiert bzw. eine geeignete Fördereinrichtung für das granulare Material ausgewählt werden.

Bei dem granularen Material kann es sich insbesondere um Saatgut handeln, alternativ oder zusätzlich jedoch auch um granulares Düngemittel oder granulares Pestizid.

Die Dosiervorrichtung kann insbesondere eine Vereinzelungsvorrichtung sein. In diesem Fall ist es gewünscht, dass genau ein Korn je Zeiteinheit über die Auslassöffnungen aus dem Gehäuse ausgeschleust und an die Abgabeeinrichtung weitergeleitet wird. Dadurch ist eine Ablage einzelner Körner in einem vorherbestimmten Längsabstand auf einer landwirtschaftlichen Fläche möglich.

In das Gehäuse der Dosiervorrichtung kann eine Zufuhrleitung münden, über die granulares Material in das Gehäuse einbringbar ist, wobei die Zufuhrleitung insbesondere in den Aufnahmebereich münden kann. Die Zufuhrleitung kann mit einer Einrichtung zur volumetrischen Vordosierung, insbesondere einem Verteilerkopf, verbunden sein.

Der Sensor kann im Abgabebereich der Dosiervorrichtung angeordnet sein, insbesondere im Bereich der Auslassöffnung. Der Sensor kann jedoch auch im Bereich einer der Auslassöffnung nachgeschalteten Verbindungsleitung zwischen dem Gehäuse und der Abgabeeinrichtung angeordnet sein.

Die der Auslassöffnung nachgeschaltete Verbindungsleitung (Fallrohr) kann insbesondere das Gehäuse mit einem Säschar verbinden. In diesem Fall kann der Sensor im Bereich der Mündung der Verbindungsleitung zum Säschar angeordnet sein. Insbesondere kann der Sensor im unteren Drittel, insbesondere im unteren Viertel, der Verbindungsleitung angeordnet sein. Die räumliche Angabe "unteres Drittel" bzw. "unteres Viertel" bezieht sich hier auf den Betrieb der Dosiervorrichtung, in dem die Dosiervorrichtung oberhalb des Säschars angeordnet ist. Die Länge der Verbindungsleitung kann dann in drei bzw. vier gleich lange Abschnitte unterteilt werden, wobei der unterste Abschnitt, also das untere Drittel bzw. untere Viertel dem Säschar am nächsten liegt.

Durch diese Maßnahme kann der Sensor also möglichst nahe dem Boden angeordnet werden. Dadurch ist es möglich, frühzeitig Verstopfungen der Verbindungsleitung durch Bodenmaterial zu registrieren. Zu solchen Verstopfungen kann es beim Anhalten und Zurückrollen mit eingesetzten Säscharen kommen (insbesondere bei Schleppscharen). Derartige Verstopfungen mit Bodenmaterial können Beschädigungen der Dosierungsvorrichtung zur Folge haben.

Wenn es zu einer Verstopfung mit Bodenmaterial kommt, fallen Körner des granularen Materials, die von der Dosierungsvorrichtung ausgegeben werden, auf die Verstopfung und bilden eine Anhäufung im Bereich des im unteren Bereich angeordneten Sensors. Dieser kann dann keine veränderliche Körneranzahl mehr bestimmen, sondern gibt ein Dauersignal aus. Eine mit dem Sensor verbundene Steuereinrichtung kann so ausgebildet sein, dass sie in Reaktion auf ein über eine vorherbestimmte Zeitperiode unverändertes Messsignal des Sensors (Dauersignal) eine Warnmeldung ausgibt. Diese Warnmeldung kann beispielsweise auf einer mit der Steuereinrichtung verbundenen Anzeigevorrichtung dargestellt werden. Dadurch kann eine Bedienperson auf eine mögliche Verstopfung der Verbindungsleitung hingewiesen werden.

Alternativ kann der Sensor aber auch im oberen Drittel, insbesondere im oberen Viertel, der Verbindungsleitung angeordnet sein. Insbesondere kann der Sensor unmittelbar im Anschluss an die Auslassöffnung in der Verbindungsleitung vorgesehen sein, insbesondere in einem Abstand zur Auslassöffnung, der kleiner oder gleich 15 cm, insbesondere kleiner oder gleich 10 cm beträgt. Der Abstand kann hier insbesondere der Minimalabstand des Sensors zur Auslassöffnung sein.

Die Verbindungsleitung kann eine Krümmung aufweisen. Dadurch folgen die Körner des granularen Materials wenigstens abschnittweise einer gekrümmten Bahn. Die Verbindungsleitung kann insbesondere in dieselbe Richtung gekrümmt sein, wie eine Führungsbahn des granularen Materials innerhalb des Gehäuses. Wenn das granulare Material das Gehäuse annähernd tangential verlässt, können sich die Körner des granularen Materials an der Innenseite der Verbindungsleitung anliegend bewegen. Es ist dann also ausreichend, nur einen Teil der Verbindungsleitung mit dem Sensor zu erfassen, nämlich die Innenwandung der gekrümmten Verbindungsleitung, entlang derer sich die Körner des granularen aufgrund der Fliehkraft bewegen.

Bei dem Sensor kann es sich insbesondere um einen optischen Sensor oder einen piezoelektrischen Sensor handeln. Beispielsweise kann der Sensor eine Kamera umfassen, wobei die Anzahl der Körner basierend auf einer Auswertung eines oder mehrerer digitaler Bilder der Kamera bestimmbar ist.

Der Sensor kann alternativ oder zusätzlich eine Lichtschranke, insbesondere eine Gabellichtschranke, umfassen, Dadurch ist eine einfache und somit auch kostengünstige Ausführung des Sensors möglich. Dabei kann die Gabellichtschranke eine oder zwei Zeilen, also Sender/Empfänger Paare, umfassen. Bei zwei Zeilen können die Zeilen übereinander angeordnet sein, also in unterschiedlichen radialen Abständen zum Zentrum des Verbindungskanals. Dadurch können auch Körner unterschiedlicher Größe zuverlässig detektiert werden. Prinzipiell sind auch mehr als zwei Zeilen denkbar, um den abgedeckten Größenbereich der Körner weiter zu erhöhen.

Der Sensor kann zerstörungsfrei lösbar an der Verbindungsleitung angebracht sein. Dadurch ist es möglich, an das granulare Material angepasste Sensoren zu verwenden. Auch kann der Sensor dadurch einfach zur Reinigung oder Reparatur entnommen werden.

Der Sensor kann insbesondere formschlüssig oder kraftschlüssig mit der Verbindungsleitung verbindbar sein. Der Sensor kann insbesondere in eine entsprechende Aufnahmeöffnung in der Verbindungsleitung einschiebbar sein.

Ein Teil eines Gehäuses des Sensors kann insbesondere einen Teil der Innenwandung der Verbindungsleitung bilden. Es ist auch denkbar, ein Sensorgehäuse ohne Sensor (einen Sensor-Dummy) mit der Verbindungsleitung zu verbinden. Sollte sich der Nutzer zu einem späteren Zeitpunkt für einen Sensor entscheiden, kann dieser Sensor-Dummy gegen einen funktionalen Sensor getauscht werden. Eine einfache Nachrüstbarkeit ist somit möglich.

Ein Messsignal des Sensors kann an eine Steuereinrichtung übermittelbar sein, wobei die Steuereinrichtung so ausgebildet ist, dass sie die Drehzahl der Fördereinrichtung basierend auf dem Messsignal steuert oder regelt. Dadurch ist es möglich, die Drehzahl der Fördereinrichtung zu optimieren und damit die Dosierqualität oder Vereinzelungsqualität zu verbessern.

Insbesondere kann das Messsignal des Sensors verwendet werden, um einen Vergleich der Körneranzahl mit einem gewünschten Wert (Sollwert) durchzuführen. Die Steuereinrichtung kann so ausgebildet sein, dass sie die Drehzahl der Fördereinrichtung basierend auf dem Vergleich mit dem Sollwert regelt oder steuert. Die Abgabe des gewünschten Werts an die Abgabeeinrichtung führt zu einer sogenannten "Sollstelle".

Aufgrund unterschiedlicher Einflüsse wird es in der Praxis häufig nicht möglich sein, eine 100-prozentig korrekte Dosierung oder Vereinzelung zu erreichen. Die Steuereinrichtung kann daher auch so ausgebildet sein, dass sie eine Kornanzahlverteilung optimiert, insbesondere, so dass die Häufigkeit des Sollwerts maximiert wird.

Der Sensor ist also so ausgebildet, dass die Anzahl der innerhalb eines bestimmten Zeitintervalls ausgeschleusten Körner für eine Vielzahl von Zeitintervallen bestimmbar ist, wobei die Steuereinrichtung so ausgebildet ist, dass sie eine auf Basis von Messsignalen des Sensors bestimmte Verteilung der Anzahl der von der Dosiervorrichtung je Zeitintervall abgegebenen Körner verwendet, um die Drehzahl der Fördereinrichtung zu steuern oder regeln. Die Verteilung der Körneranzahl kann insbesondere das Verhältnis von Doppel- oder Mehrfachstellen zu Fehlstellen und Sollstellen wiedergeben. Über eine entsprechende Regelung oder Steuerung der Drehzahl kann auf eine bestmögliche Sollstellen-Häufigkeit geregelt werden, also darauf, dass möglichst häufig die gewünschte Anzahl von Körnern ausgeschleust und an die Abgabeeinrichtung weitergeleitet wird.

Die Fördereinrichtung kann zur Anpassung an unterschiedliche Korngrößen ganz oder teilweise austauschbar sein, wobei ein Messsignal des Sensors an eine Steuereinrichtung übermittelbar ist, und wobei die Steuereinrichtung so ausgebildet ist, dass sie basierend auf dem Messsignal bestimmt, ob ein Austausch der Fördereinrichtung erforderlich ist. Dadurch ist es in einfacher Weise möglich festzustellen, ob die für die Korngrößenverteilung des granularen Materials geeignete Fördereinrichtung verwendet wird oder nicht. Die geeignete Fördereinrichtung wird also basierend auf der Qualität der Dosierung bestimmt, nicht durch Messen von Korngrößen des granularen Materials. Dies ist insbesondere deshalb vorteilhaft, weil das granulare Material üblicherweise nicht kalibriert ist, also keine konstante Größe aufweist.

Die Fördereinrichtung kann insbesondere Taschen wie in der DE 10 2012 105 048 A1 beschrieben aufweisen. Die Größe der verwendeten Taschen hängt von der Größe der zu vereinzelnden Körner des granularen Materials ab.

Die Steuereinrichtung kann insbesondere so ausgebildet sein, dass sie bestimmt, welche von mehreren möglichen Fördereinrichtungen verwendet werden soll, wenn sie bestimmt, dass ein Austausch der Fördereinrichtung erforderlich ist. Dadurch kann die Auswahl der korrekten Fördereinrichtung für die Bedienperson erleichtert werden.

Die Steuereinrichtung kann insbesondere so ausgebildet sein, dass sie ein Anzeigesignal an eine Anzeigevorrichtung zur Anzeige der zu verwendenden Fördereinrichtung erzeugt und an die Anzeigevorrichtung übermittelt. Dadurch kann die zu verwendende Fördereinrichtung auf der Anzeigevorrichtung angezeigt werden. Die Bedienperson kann dadurch auf einfache Weise die zu verwendende Fördereinrichtung erkennen.

Beispielsweise kann eine Bezeichnung oder ein Symbol der zu verwendenden Fördereinrichtung angezeigt werden.

Die Dosiervorrichtung kann auch derart ausgebildet sein, dass die Fördereinrichtung einen Zentrierschieber umfasst, wobei das Führungselement so angeordnet ist, dass der Zentrierschieber bei seiner Drehbewegung das Führungselement wenigstens teilweise überstreicht, wobei der Zentrierschieber und das Führungselement so ausgebildet sind, dass im Betrieb der Dosiervorrichtung granulares Material durch den Zentrierschieber entlang einer Führungsfläche des Führungselements von einem Aufnahmebereich in einen Abgabebereich geschoben wird, und wobei der Zentrierschieber so ausgebildet ist, dass er ein Korn des granularen Materials beim Transport vom Aufnahmebereich zum Abgabebereich zentriert, indem er es wenigstens teilweise beidseitig abstützt oder führt.

Nicht zentrierte Körner, die im Aufnahmebereich aufgenommen und entlang der Führungsfläche transportiert werden, können infolge ausgesondert werden, sodass im Abgabebereich das zentrierte Korn verbleibt und an die Abgabeeinrichtung zur Ablage auf einer landwirtschaftlichen Fläche weitergeleitet werden kann. Insbesondere kann genau ein Korn durch den Zentrierschieber zentriert geführt werden. Die Dosiervorrichtung kann also eine Vereinzelungsvorrichtung sein.

Die Angabe "beidseitig abstützt oder führt" bedeutet hier, dass der Zentrierschieber Elemente umfasst, welche das zentrierte Korn an beiden Seiten abstützen oder führen. Damit kann eine Bewegung des Korns quer zur Drehrichtung reduziert oder vermieden werden, sodass das zentrierte Korn im Wesentlichen entlang einer vorbestimmten Bewegungsbahn vom Aufnahmebereich in den Abgabebereich geschoben wird. Um das Korn seitlich zu führen ist es nicht erforderlich, dass der Zentrierschieber stets in direktem Kontakt mit dem Korn steht. Es ist ausreichend, wenn der Zentrierschieber verhindert, dass das Korn einen vorherbestimmten seitlich begrenzten Bereich verlässt.

Die Angabe "wenigstens teilweise" bedeutet in diesem Zusammenhang, dass der Zentrierschieber das Korn nicht durchgehend vom Aufnahmebereich bis zum Abgabebereich beidseitig abstützen oder führen muss. Beispielsweise kann es Zeit in Anspruch nehmen, bis sich das Korn so relativ zum Zentrierschieber ausgerichtet hat, dass eine beidseitige Abstützung oder Führung möglich ist. Während dieser Zeit kann das Korn bereits einen gewissen Weg vom Aufnahmebereich zum Abgabebereich bewegt werden. Das Korn kann aber auch entlang des gesamten Wegs beidseitig abgestützt oder geführt werden.

Der Zentrierschieber kann auch Elemente umfassen, welche das zentrierte Korn in Drehrichtung gesehen nach hinten abstützt. Die Elemente, welche die seitliche Abstützung oder Führung bewirken können zugleich auch die Abstützung nach hinten gewährleisten.

Der Zentrierschieber kann so drehbar in dem Gehäuse gelagert sein, dass er entlang einer Kreisbahn bewegbar ist, wobei das Führungselement wenigstens teilweise entlang der Kreisbahn verläuft, und wobei die Breite der Führungsfläche vom Aufnahmebereich zum Abgabebereich hin abnimmt.

Durch die abnehmende Breite der Führungsfläche können die Körner, welche nicht durch den Zentrierschieber zentriert werden, im Laufe der Bewegung vom Aufnahmebereich in den Abgabebereich aufgrund der wegfallenden Stütze durch die Führungsfläche unter Zentrifugalkrafteinflüssen und/oder Schwerkrafteinflüssen ausgesondert werden. Diese können zur erneuten Förderung in den Aufnahmebereich zurückgeführt werden, insbesondere durch Trägheit und/oder unter Schwerkrafteinfluss.

Der Zentrierschieber kann so im Gehäuse gelagert sein, dass die Kreisbahn im Betrieb der Dosiervorrichtung im Wesentlichen vertikal verläuft. Insbesondere kann die Kreisbahn mit der Senkrechten einen Winkel zwischen 0° und 10°, insbesondere zwischen 0° und 5°, einschließen.

Das Führungselement kann insbesondere radial außerhalb der Kreisbahn verlaufen. Mit anderen Worten kann das Führungselement die Kreisbahn wenigstens teilweise radial umgeben oder begrenzen. Das Führungselement kann insbesondere annähernd tangential entlang bestimmten Abschnitten der Kreisbahn verlaufen, insbesondere im Abschnitt der Kreisbahn zwischen dem Aufnahmebereich und dem Abgabebereich.

Die Kreisbahn kann insbesondere durch ein äußerstes Ende oder eine Spitze des Zentrierschiebers überstrichen werden. Mit anderen Worten kann die Kreisbahn einen Radius aufweisen, der der Länge des Zentrierschiebers entspricht. Die Länge des Zentrierschiebers kann der maximalen radialen Erstreckung des Zentrierschiebers ausgehend von der Drehachse entsprechen.

Als Aufnahmebereich kann ein Teil des Gehäuseinneren bezeichnet werden, in dem im Betrieb ein Reservoir von Körnern des granularen Materials so bereitgestellt wird, dass der Zentrierschieber wenigstens eines dieser Körner aufnehmen und zum Abgabebereich hin bewegen kann.

Der Aufnahmebereich kann ein bestimmtes Kreissegment der Kreisbahn des Zentrierschiebers umfassen.

Als Abgabebereich kann ein Teil des Gehäuseinneren bezeichnet werden, in dem eine Auslassöffnung im Gehäuse angeordnet ist, über die wenigstens ein Korn des granularen Materials, das vom Zentrierschieber in den Abgabebereich geschoben wurde, aus dem Gehäuse ausgebracht werden kann. Das wenigstens eine Korn kann dann an eine Abgabeeinrichtung geleitet werden, über die das wenigstens eine Korn auf einer landwirtschaftlichen Fläche abgelegt wird. Das wenigstens eine Korn kann insbesondere dem durch den Zentrierschieber zentrierten Korn entsprechen.

Als Führungsfläche des Führungselements wird hierin die für die Förderung des granularen Materials vom Aufnahmebereich in den Abgabebereich wirksame Fläche des Führungselements bezeichnet. Mit anderen Worten entspricht die Führungsfläche des Führungselements der Oberfläche des Führungselements, auf der Körner des granularen Materials bei der Förderung von dem Aufnahmebereich in den Abgabebereich hin bewegt werden. Aufgrund der Bewegung entlang der Kreisbahn wird das granulare Material durch Fliehkraft gegen die Führungsfläche des Führungselements gedrückt. Die Führungsfläche des Führungselements dient daher als Stütze für das granulare Material entgegen der Fliehkraft.

Wenn die Breite der Führungsfläche abnimmt geht diese Stützwirkung für bestimmte Körner des granularen Materials verloren, weshalb diese nicht weiter zum Abgabebereich hin gefördert werden können, sondern ausgesondert werden.

Die Breite der Führungsfläche kann vom Aufnahmebereich zum Abgabebereich hin kontinuierlich abnehmen. Dadurch können überschüssige Körner sukzessive ausgesondert werden. Diese werden dann sukzessive an den Aufnahmebereich zurückgeführt, sodass ein ausreichendes Reservoir von granularem Material im Aufnahmebereich bereitgestellt werden kann, selbst wenn über die Zufuhrleitung temporär zu wenig granulares Material zugeführt wird. Die Breite der Führungsfläche kann jedoch auch diskontinuierlich abnehmen.

Als Breite der Führungsfläche kann insbesondere die Ausdehnung der Führungsfläche quer zur Kreisbahn bezeichnet werden. Die Richtung quer zur Kreisbahn bezeichnet hierin eine Richtung, die an jedem Punkt der Kreisbahn senkrecht zur Tangente und senkrecht zum Radius der Kreisbahn verläuft. Die Ausdehnung der Führungsfläche in dieser Richtung wird entlang der, gegebenenfalls konturierten, Führungsfläche bestimmt.

Das Führungselement kann eine Vertiefung aufweisen, in die der Zentrierschieber wenigstens teilweise eingreift, wobei die Tiefe der Vertiefung entlang der Kreisbahn des Vereinzelungsschiebers vom Aufnahmebereich zum Abgabebereich hin abnimmt. Durch die Vertiefung im Aufnahmebereich ist es möglich, dass zuverlässig Saatgut durch den Zentrierschieber aufgenommen und entlang der Führungsfläche bewegt werden kann. Durch die abnehmende Tiefe der Vertiefung entlang der Kreisbahn kann wiederum eine Aussonderung überschüssiger Körner des granularen Materials bewirkt werden. Die Abnahme der Tiefe geht mit einer Abnahme der Breite der Führungsfläche einher.

Die Vertiefung im Führungselement kann insbesondere einer Nut oder Kerbe entsprechen. Die Nut oder Kerbe kann insbesondere V-förmig ausgebildet sein.

Das Führungselement kann im Abgabebereich einen in Drehrichtung verlaufenden Grat aufweisen. Durch einen solchen Grat wird eine Vereinzelung des granularen Materials weiter gefördert, da entlang des Grats üblicherweise nur ein Korn stabil bewegt werden kann, nämlich das Korn, welches wenigstens teilweise durch den Zentrierschieber zentriert wird. Die vorherbestimmte Bahn entlang der Führungsfläche, entlang der der Zentrierschieber ein Korn zentriert bewegt, kann insbesondere entlang des Grats verlaufen.

Der Sammelraum kann beidseitig des Führungselements angeordnet sein.

Das Führungselement kann an einer Innenfläche des Gehäuses angeordnet sein, welche den Raum, in dem der Zentrierschieber im Betrieb rotiert, radial begrenzt. Mit anderen Worten kann das Gehäuse im Wesentlichen zylindrisch ausgebildet sein, wobei das Führungselement an der Mantelfläche des Gehäuses angeordnet ist.

Das Führungselement kann Teil der Innenfläche des Gehäuses sein. Alternativ kann das Führungselement zerstörungsfrei lösbar oder nicht zerstörungsfrei lösbar mit der Innenfläche des Gehäuses verbunden sein. Beispielsweise kann das Führungselement an das Gehäuse angeschweißt sein.

Das Führungselement und der Zentrierschieber können in einer gemeinsamen Ebene angeordnet sein, wobei das Führungselement und der Zentrierschieber bezüglich dieser Ebene symmetrisch ausgebildet sind. Die gemeinsame Ebene kann insbesondere eine Rotationsebene des Zentrierschiebers sein.

Falls das Führungselement eine Vertiefung aufweist, können die Punkte mit der größten Tiefe in der gemeinsamen Ebene liegen.

Falls das Führungselement einen Grat aufweist, kann dieser ebenfalls in der gemeinsamen Ebene liegen.

Die Dosiervorrichtung kann wenigstens einen weiteren Zentrierschieber umfassen. Dieser kann eines oder mehrere Merkmale des oben genannten Zentrierschiebers aufweisen. Insbesondere kann der wenigstens eine weitere Zentrierschieber so drehbar im Gehäuse gelagert ist, dass er entlang der Kreisbahn bewegbar ist. Mit anderen Worten kann der weitere Zentrierschieber in Umfangsrichtung versetzt zum oben beschriebenen Zentrierschieber angeordnet sein und dem oben beschriebenen Zentrierschieber nachlaufend entlang der Kreisbahn bewegbar sein.

Der Zentrierschieber und der wenigstens eine weitere Zentrierschieber können miteinander verbunden sein, insbesondere starr miteinander verbunden sein.

Der Zentrierschieber und der wenigstens eine weitere Zentrierschieber können an einer gemeinsamen rotierenden Scheibe angeordnet sein.

Der Zentrierschieber und der wenigstens eine weitere Zentrierschieber können ein die Zentrierwirkung des Zentrierschiebers erzeugendes Element aufweisen. Dieses Element kann insbesondere so ausgebildet sein, dass ein Korn des granularen Materials beidseitig stützbar oder führbar ist. Das Element kann nach vorne hin offen sein. Mit anderen Worten kann eine Abstützung des Korns nach vorne hin unterbleiben.

Der Zentrierschieber kann insbesondere eine in Drehrichtung offene Nut oder Kerbe zur Aufnahme eines Korn des granularen Materials umfassen. Die Nut oder Kerbe kann auch in Richtung der Führungsfläche offen sein. Die Größe der Nut kann so gewählt sein, dass sich maximal ein Korn ganz oder teilweise in der Nut anordnen kann.

Die Nut kann insbesondere konisch oder V-förmig ausgebildet sein. Die Nut kann insbesondere bezüglich der oben genannten gemeinsamen Ebene des Führungselements und des Zentrierschiebers symmetrisch ausgebildet sein. Eine korrespondierende Vertiefung im Führungselement kann ebenfalls symmetrisch bezüglich dieser Ebene ausgebildet sein. Diese Symmetrie erlaubt insbesondere ein beidseitiges Absondern von überschüssigen Körnern in den umgebenden Sammelraum.

In einer alternativen Ausführungsform kann der Zentrierschieber mehrere in Richtung des Führungselements weisende Borsten aufweisen. Wenn die Breite der Führungsfläche zum Abgabebereich hin abnimmt, werden äußere Borsten nicht mehr entlang der Führungsfläche bewegt und stellen sich infolge der Fliehkraftwirkung auf. Damit können diese Borsten ein Korn des granularen Materials seitlich führen. Nachlaufende Borsten können das Korn in Drehrichtung gesehen nach hinten abstützen. Mit anderen Worten kann sich auch bei einem Borsten umfassenden Zentrierschieber eine konische oder V-förmige Zentrierfläche für ein Korn ausbilden.

Das die Zentrierwirkung des Zentrierschiebers erzeugende Element des Zentrierschiebers kann insbesondere am äußersten Ende oder an der Spitze des Zentrierschiebers angeordnet sein. Dieses Zentrierelement kann austauschbar sein. Beispielsweise kann eine die oben genannte Nut des Zentrierschiebers umfassende Spitze des Zentrierschiebers auswechselbar sein. Dadurch kann eine gewisse Anpassung oder Optimierung hinsichtlich der Korngrößen erzielt werden.

Die Dosiervorrichtung kann wenigstens ein Störelement umfassen, welches so ausgebildet ist, dass Körner des granularen Materials, die nicht durch den Zentrierschieber zentriert werden unter Einfluss des Störelements ihre Lage ändern oder vom Transport zum Abgabebereich hin ausgesondert werden. Ein derartiges Störelement begünstigt das Aussondern überschüssiger Körner und somit die Vereinzelung des granularen Materials.

Das Störelement kann beispielsweise eine Druckluftdüse umfassen.

Es kann also wenigstens eine Druckluftdüse vorgesehen und so angeordnet sein, dass Druckluft auf granulares Material gerichtet werden kann, welches durch den Zentrierschieber entlang der Führungsfläche des Führungselements geschoben wird. Diese Druckluft kann eine Störung für Körner des granularen Materials darstellen, welche nicht durch den Zentrierschieber zentriert geführt werden. Dadurch kann die Aussonderung von überschüssigen Körnern unterstützt werden. Dies kann auch eine zuverlässigere Vereinzelung des granularen Materials ermöglichen.

Die Druckluftdüse kann in das Führungselement integriert sein, und insbesondere eine Luftausströmöffnung umfassen, die in der Führungsfläche angeordnet ist. Dadurch ist eine besonders effiziente Störung überschüssiger Körner möglich.

Alternativ oder zusätzlich ist es auch denkbar, eine mit Druckluft beaufschlagbare Scheibe vorzusehen, die gemeinsam mit dem Zentrierschieber rotiert und wenigstens eine Öffnung aufweist, die im Bereich des Zentrierschiebers angeordnet ist. Diese mitlaufende Öffnung kann in Drehrichtung gesehen insbesondere stromabwärts des Zentrierschiebers angeordnet sein, also vorlaufen.

Das Störelement kann alternativ oder zusätzlich ein geometrisches Störelement sein. Mit anderen Worten kann das wenigstens eine Störelement einer lokalen Änderung der Geometrie der Führungsfläche des Führungselements entsprechen. Insbesondere kann das wenigstens eine Störelement eine veränderte Neigung der Führungsfläche umfassen. Im Bereich des Störelements kann sich die Geometrie der Führungsfläche insbesondere diskontinuierlich ändern.

Die oben genannte Steuereinrichtung kann eine Steuereinrichtung einer landwirtschaftlichen Maschine, insbesondere einer landwirtschaftlichen Sämaschine sein. Bei der Steuereinrichtung kann es sich insbesondere um den Bordcomputer der landwirtschaftlichen Maschine handeln. Die Anzeigevorrichtung kann insbesondere eine Anzeigevorrichtung des Bordcomputers der landwirtschaftlichen Maschine sein.

Die Steuereinrichtung kann so ausgebildet sein, dass sie basierend auf dem Messsignal des Sensors einen Fehlerzustand der Dosierungsvorrichtung erkennt. Beispielsweise kann basierend auf dem Messsignal bestimmt werden, ob Fehlstellen oder Mehrfachstellen gemäß einem zeitlichen Muster auftreten, beispielsweise periodisch. Wenn ein zeitliches Muster auftritt, kann auf das Vorliegen eines Fehlerzustandes der Dosierungsvorrichtung geschlossen werden. Ist lediglich die Drehzahl der Fördereinrichtung nicht optimal eingestellt, kommt es nämlich üblicherweise nur zu unregelmäßig auftretenden Fehlstellen oder Mehrfachstellen. Zu periodisch auftretenden Fehlstellen kann es beispielsweise kommen, wenn sich in Taschen gemäß der DE 10 2012 105 048 A1 ein Korn verklemmt oder sich ein Fremdkörper befindet, sodass sich eine befüllte Tasche nicht wieder entleeren kann.

Wenn die Steuereinrichtung das Vorhandensein eines Fehlerzustandes der Dosiervorrichtung erkennt, kann sie die Ausgabe einer Warnmeldung veranlassen, beispielsweise über eine Anzeigevorrichtung.

Die Steuereinrichtung kann auch so ausgebildet sein, dass sie den zeitlichen Abstand zwischen detektierten Körnern des granularen Materials auf Basis des Messsignals des Sensors bestimmt. Im Idealfall sollte dieser zeitliche Abstand möglichst konstant sein. Wenn die Steuereinrichtung feststellt, dass die zeitlichen Abstände um einen Mittelwert oder gewünschten Wert um mehr als einen vorherbestimmten Schwellenwert streuen, kann die Steuereinrichtung die Ausgabe einer Warnmeldung veranlassen, beispielsweise über eine Anzeigevorrichtung. Als Maß für die Streuung der zeitlichen Abstände kann die Varianz oder die Standardabweichung verwendet werden.

In diesem Zusammenhang kann der Sensor insbesondere im Bereich der Mündung der Verbindungsleitung zum Säschar angeordnet sein. Insbesondere kann der Sensor im unteren Drittel, insbesondere im unteren Viertel, der Verbindungsleitung angeordnet sein. Zu einer Streuung der zeitlichen Abstände zwischen den Körnern kann es insbesondere kommen, wenn die Qualität der Verbindungsleitung schlecht ist oder sich Fremdkörper in der Verbindungsleitung befinden. In diesem Fall "verspringen" Körnern innerhalb der Verbindungsleitung, was zu einer Veränderung des Abstandes führt, mit dem die Körner ursprünglich von der Dosiervorrichtung ausgegeben wurden.

Die Erfindung stellt auch ein System bereit, umfassend eine oben beschriebene Dosiervorrichtung und eine oben beschriebene Steuereinrichtung.

Außerdem stellt die Erfindung ein Verfahren zum Dosieren von granularem Material, insbesondere Saatgut, gemäß Anspruch 10 bereit.

Das Verfahren kann insbesondere mit einer oben beschriebenen Dosiervorrichtung oder einem oben beschriebene System durchgeführt werden. Das Verfahren kann also auch ein Bereitstellen einer oben beschriebenen Dosiervorrichtung oder eines entsprechenden Systems umfassen.

Die Erfindung stellt schließlich noch eine Sämaschine bereit, umfassend eine oben beschriebene Dosiervorrichtung oder ein oben beschriebenes System. Bei der Sämaschine kann es sich insbesondere um eine Einzelkornsämaschine handeln

Weitere Merkmale und Vorteile der Erfindung werden nachfolgend anhand der beispielhaften Figuren erläutert. Dabei zeigt:
- Figur 1: einen Querschnitt durch eine beispielhafte Dosiervorrichtung in einer ersten Betriebseinstellung;
- Figur 2: einen Querschnitt durch eine beispielhafte Dosiervorrichtung in einer zweiten Betriebseinstellung;
- Figur 3: einen Querschnitt durch eine beispielhafte Dosiervorrichtung in einer dritten Betriebseinstellung
- Figur 4: ein Flussdiagramm für ein beispielhaftes Verfahren zum Dosieren von granularem Material;
- Figur 5: eine Illustration einer beispielhaften Fördereinrichtung;
- Figur 6: ein Flussdiagramm eines weiteren beispielhaften Verfahrens zum Dosieren von granularem Material;
- Figuren 7A - 7B: perspektivische Ansichten einer weiteren beispielhaften Dosiervorrichtung;
- Figur 8: einen Querschnitt durch eine beispielhafte Dosiervorrichtung nach Figur 7A; und
- Figur 9: einen Querschnitt durch einen Sensor gemäß dem Beispiel der Figur 7A.

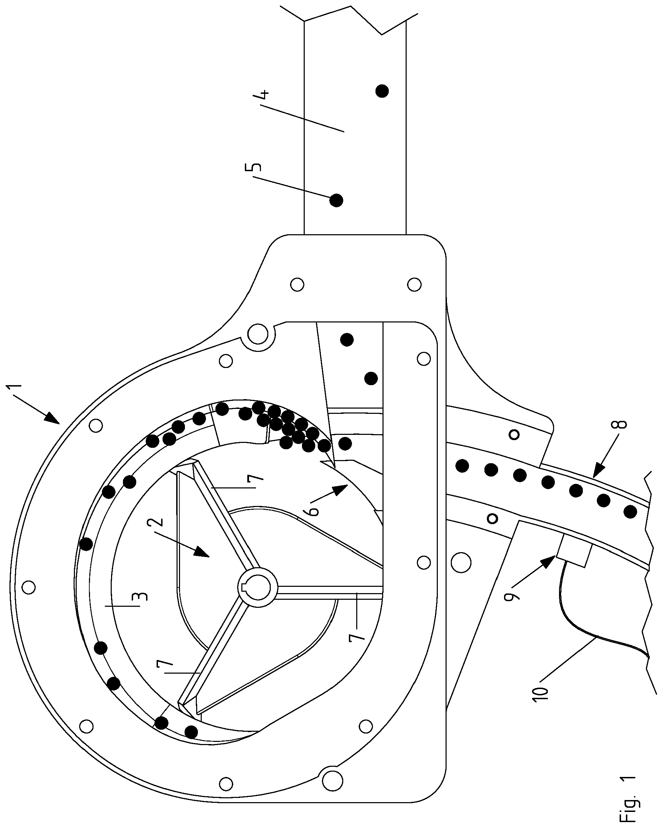

Figur 1 zeigt einen Querschnitt durch eine beispielhafte Dosiervorrichtung für granulares Material gemäß der vorliegenden Erfindung. Die Dosiervorrichtung umfasst ein Gehäuse 1, in dem eine Fördereinrichtung 2 drehbar gelagert ist.

Über eine Zufuhrleitung 4 werden Körner 5 des granularen Materials, beispielsweise Saatgut, in einen Aufnahmebereich 6 im Gehäuse 1 transportiert. Die Zufuhrleitung 4 kann über einen nicht gezeigten Verteilerkopf mit granularem Material gespeist werden.

Die Fördereinrichtung 2 umfasst in diesem Beispiel drei Zentrierschieber 7, welche bei ihrer Drehbewegung wenigstens teilweise ein Führungselement 3 überstreichen, welches wenigstens teilweise entlang einer Kreisbahn angeordnet ist, deren Radius der Länge der Zentrierschieber 7 entspricht.

Die Zentrierschieber 7 und das Führungselement 3 wirken so zusammen, dass im Betrieb der Dosiervorrichtung granulares Material durch die Zentrierschieber 7 entlang einer Führungsfläche des Führungselements 3 von dem Aufnahmebereich 6 in einen Abgabebereich geschoben wird.

Im Abgabebereich ist eine Auslassöffnung vorgesehen, über die das granulare Material aus dem Gehäuse 1 ausgeschleust werden kann. Das so ausgeschleuste granulare Material kann an eine Abgabeeinrichtung geleitet werden, welche das granulare Material auf einer landwirtschaftlichen Fläche ablegt. Die Abgabeeinrichtung kann beispielsweise ein Säschar umfassen.

In Figur 1 ist eine Verbindungsleitung 8 dargestellt, welche das Gehäuse 1 mit der nicht gezeigten Abgabeeinrichtung verbindet, und über die aus dem Gehäuse 1 ausgeschleustes granulares Material an die Abgabeeinrichtung geleitet werden kann.

Die Dosiervorrichtung gemäß Figur 1 arbeitet als Vereinzelungsvorrichtung. Es wird also ein einzelnes Korn in vorherbestimmten zeitlichen Abständen aus dem Gehäuse 1 ausgeschleust und an die Abgabeeinrichtung geleitet.

Die Vorrichtung gemäß Figur 1 arbeitet in gewünschter Weise. Insbesondere ist der Abstand zwischen den vereinzelten Körnern in der Leitung 8 annähernd konstant. Außerdem wird je Zeitintervall nur ein einzelnes Korn ausgeschleust. Es kommt daher weder zu Fehlstellen noch zu Doppel- oder Mehrfachstellen, also Zeitintervallen, in denen entweder kein Korn oder mehrere Körner von der Dosiervorrichtung abgegeben werden.

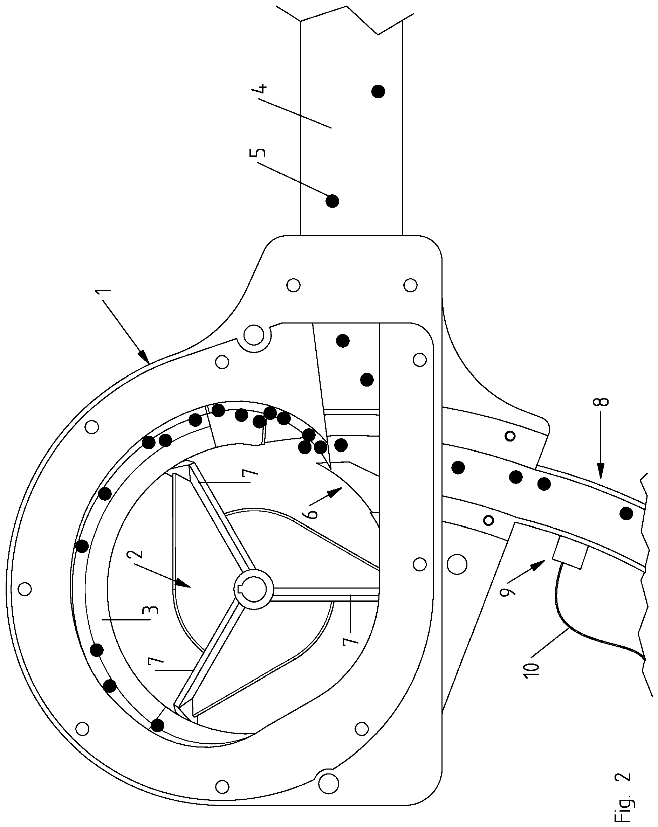

In Figur 2 ist dagegen ein Querschnitt durch die Vorrichtung gemäß Figur 1 gezeigt, wobei die Vereinzelungsvorrichtung nicht wie gewünscht arbeitet, da es zu sogenannten Fehlstellen kommt. Mit anderen Worten wird durch die Dosiervorrichtung in bestimmten Zeitintervallen kein Korn ausgegeben. Dadurch erhöhen sich die Abstände zwischen den Körnern in der Leitung 8. Entsprechend erhöhen sich auch die Abstände des abgelegten Saatgutes auf der landwirtschaftlichen Fläche, was wiederum dazu führt, dass die landwirtschaftliche Fläche nicht optimal genutzt werden kann. Diese Betriebsweise ist also üblicherweise unerwünscht.

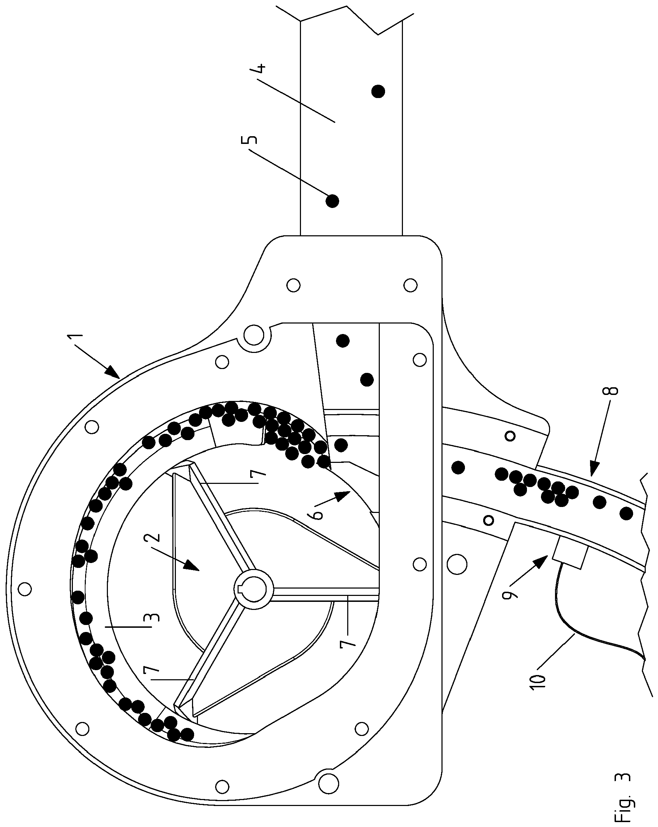

Figur 3 zeigt ebenfalls ein Beispiel, bei dem die Vereinzelungsvorrichtung der Figur 1 nicht wie gewünscht arbeitet. In der Leitung 8 befinden sich mehrere Anhäufungen von Körnern. Die Dosiervorrichtung gibt hier also in bestimmten Zeitintervallen nicht ein einzelnes Korn sondern mehrere Körner gleichzeitig ab. Dies führt zu sogenannten Mehrfachstellen, was dazu führt, dass an einem Ort der landwirtschaftlichen Fläche anstelle eines einzelnen Korns mehrere Körner abgelegt werden. Dies ist nachteilig, da sich die aus dem Saatgut resultierenden Pflanzen gegenseitig negativ beeinflussen können und es somit zu keiner optimalen Ausnutzung des Saatgutes kommt.

Zu solchen Fehl- oder Mehrfachstellen kann es insbesondere kommen, wenn die Drehzahl, mit der die drehbar gelagerte Fördereinrichtung 2 im Betrieb rotiert nicht optimal eingestellt ist, insbesondere nicht auf den zugeförderten Strom von granularem Material über die Zufuhrleitung 4 angepasst ist. Ist die Drehzahl zu hoch, wird über die Zufuhrleitung 4 nicht genügend granulares Material zugeführt, was dazu führt, dass es zu Fehlstellen kommt, wie in Figur 2 gezeigt.

Ist die Drehzahl demgegenüber zu gering stauen sich viele Körner 5 des granularen Materials im Aufnahmebereich und die Vereinzelung durch den Zentrierschieber 7 in Zusammenwirken mit dem Führungselement 3 kann nicht ausreichend effizient erfolgen. Es kommt also zu Mehrfachstellen, wie in Figur 3 illustriert.

Die Dosiervorrichtung gemäß dem Ausführungsbeispiel umfasst daher einen in den Figuren 1 bis 3 gezeigten Sensor 9, mit dem die Anzahl der Körner des granularen Materials bestimmbar ist, die über die Auslassöffnung aus dem Gehäuse ausgeschleust und an die Abgabeeinrichtung weitergeleitet werden. Der Sensor 9 ist also ein Körnerzähler.

Der Sensor 9 ist in diesem Beispiel im Bereich der Leitung 8 angeordnet. Der Sensor könnte jedoch auch weiter stromaufwärts im Bereich der Auslassöffnung angeordnet sein oder alternativ auch im Bereich der hier nicht dargestellten Abgabeeinrichtung, insbesondere im unteren Drittel oder unteren Viertel der Leitung 8.

Mit dem Sensor 9 kann insbesondere das Verhältnis von Mehrfachstellen zu Fehlstellen und Sollstellen bestimmt werden. Als Sollstelle wird hierin eine Abgabe durch die Dosiervorrichtung in einem Zeitintervall bezeichnet, in dem die gewünschte Anzahl von Körnern des granularen Materials, insbesondere ein einzelnes Korn, ausgeschleust und an die Abgabeeinrichtung weitergeleitet wird.

Der Sensor 9 ist über eine Datenleitung 10 mit einer hier nicht dargestellten Steuereinrichtung verbunden. Diese Steuereinrichtung kann so ausgebildet sein, dass sie basierend auf den Sensordaten die Drehzahl der rotierenden Fördereinrichtung 2 steuert oder regelt, so dass die Sollstellenhäufigkeit optimiert wird, also möglichst ein Ergebnis wie in Figur 1 dargestellt erreicht wird.

Bei dem Sensor kann es sich um einen optischen Sensor oder einen piezoelektrischen Sensor handeln. Messsignale des Sensors 9 können über die Datenleitung 10 an die Steuereinrichtung übermittelt werden. Die Messsignale können beispielsweise digitalen Bildern entsprechen. Durch Auswertung dieser digitalen Bilder kann bestimmt werden, ob in einem bestimmten Zeitintervall die gewünschte Anzahl von Körnern abgegeben wurde oder nicht.

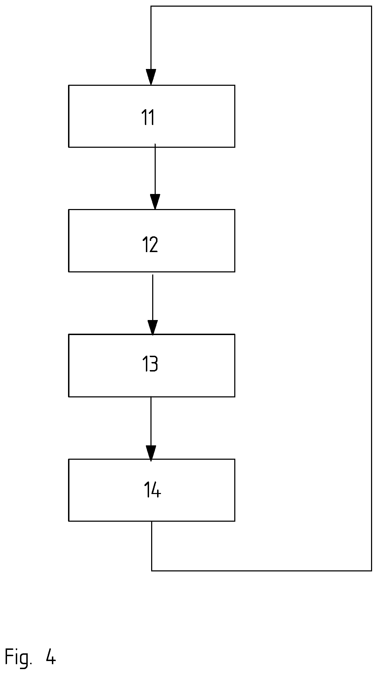

Figur 4 zeigt ein Flussdiagramm eines beispielhaften Verfahrens, welches mit einer oben gezeigten Vorrichtung durchführbar ist.

In Schritt 11 werden zunächst für mehrere Zeitintervalle die im jeweiligen Zeitintervall von der Dosiervorrichtung ausgeschleusten Körner detektiert. Ein entsprechendes Messsignal kann dann über die Leitung 10 an eine Steuereinrichtung übermittelt werden. Das Messsignal kann bereits die Anzahl der Körner angeben, beispielsweise nach interner Verarbeitung im Sensor 9, oder kann Daten aufweisen, aus denen die Steuereinrichtung die Anzahl der Körner bestimmen kann.

In Schritt 12 wird dann durch die Steuereinrichtung für eine mehrere Zeitintervalle umfassende Zeitspanne eine Verteilung, insbesondere eine Anzahlverteilung, der Körner pro Zeitintervall erstellt. Diese Verteilung kann dann in Schritt 13 mit einer gewünschten Verteilung verglichen werden.

Alternativ kann durch die Steuereinrichtung bestimmt werden, ob häufiger mehr Körner ausgegeben werden pro Zeitintervall als gewünscht oder weniger.

In Schritt 14 kann dann abhängig von dem Ergebnis in Schritt 13 die Drehzahl der rotierenden Fördereinrichtung gesteuert oder geregelt werden, insbesondere um die Häufigkeit zu maximieren, mit der der Sollwert der Anzahl der Körner pro Zeitintervall ausgeschleust wird.

Wenn beispielsweise Schritt 13 bestimmt wird, dass häufiger weniger Körner ausgegeben werden als gewünscht kann die Drehzahl verringert werden. Alternativ, wenn festgestellt wird, dass häufiger mehr Körner ausgegeben werden als gewünscht kann die Drehzahl erhöht werden.

Danach kehrt das Verfahren zu Schritt 11 zurück.

Die Dosiervorrichtung kann so ausgebildet sein, dass die Fördereinrichtung mit einer Frequenz zwischen 5 Hz und 60 Hz rotiert. Durch eine Ausbildung der Fördereinrichtung mit beispielsweise drei Zentrierschiebern 7, wird so eine Vereinzelungsfrequenz von 15 Hz bis 180 Hz ermöglicht. Dadurch können sehr geringe Abstände zwischen den abgelegten Körnern erzielt werden.

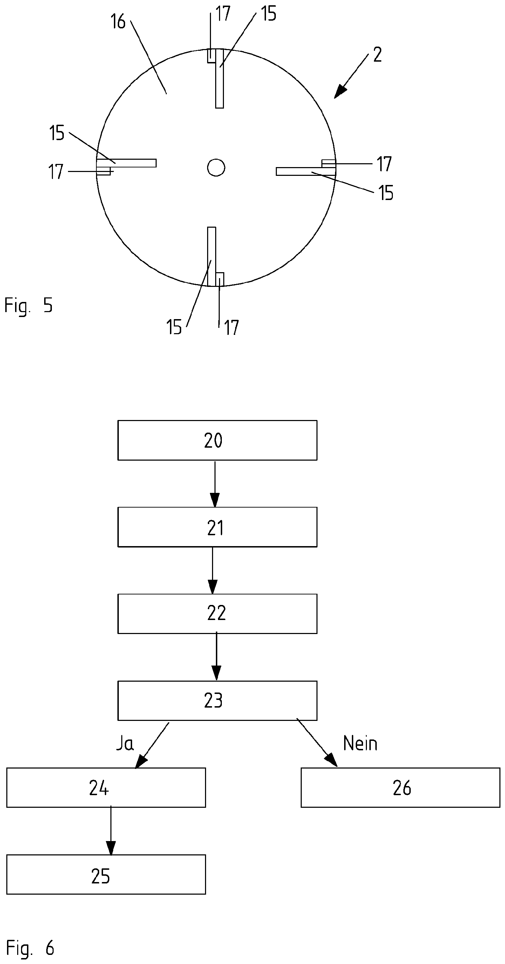

Figur 5 zeigt eine alternative Fördereinrichtung, welche in einer beispielhaften Dosiervorrichtung verwendet werden kann. Die Fördereinrichtung 2 umfasst in diesem Beispiel vier Mitnehmer 15, welche auf einer rotierenden Scheibe 16 angeordnet sind. Außerdem sind in der Scheibe 16 vier Ausnehmungen oder Öffnungen 17 im Bereich der Mitnehmer 15 angeordnet. Diese Öffnungen 17 bilden zusammen mit der Gehäuseinnenmantelfläche einer Dosiervorrichtung (hier nicht gezeigt) Taschen, in denen Körner des granularen Materials angeordnet und kreisförmig befördert werden, bis in einem vorherbestimmten Gehäusebereich durch eine veränderte Kontur der Innenmantelfläche des Gehäuses und unter Zentrifugalkrafteinflüssen nur jeweils ein einzelnes Korn in der Tasche verbleibt, während überschüssige Körner ausgesondert und zur erneuten Förderung in einen ersten Gehäusebereich zurückgeführt werden. Die Fördereinrichtung der Figur 5 ist entsprechend der DE 10 2012 105 048 A1 ausgebildet.

Die Größe der Öffnungen 17 muss an die Korngröße des granularen Materials angepasst werden, insbesondere so, dass im vorherbestimmten Gehäusebereich nur ein Korn in der Tasche verbleiben kann. Wäre die Öffnung 17 und damit die resultierende Tasche zu klein, könnte darin kein Korn angeordnet werden, sodass es zu Fehlstellen kommt. Ist die Öffnung 17 und damit die resultierende Tasche jedoch zu groß gewählt, ordnen sich mehrere Körner in der Tasche an, sodass es zu Doppel- oder Mehrfachstellen kommen kann.

Um die Vorrichtung an unterschiedliche Korngrößen anpassen zu können, ist die Scheibe 16 üblicherweise austauschbar im Gehäuse der Dosiervorrichtung angeordnet. Es werden mehrere Scheiben 16, beispielsweise fünf verschiedene Scheiben, mit unterschiedlichen Größen der Öffnungen 17 bereitgestellt. Da die Korngröße auch für ein bestimmtes Saatgut variieren kann, ist es nicht unmittelbar ersichtlich, welche der austauschbaren Scheiben 16 das beste Vereinzelungsresultat liefert.

Auch hier kann der in den Figuren 1 bis 3 dargestellte Sensor 9 Verwendung finden. Insbesondere kann eine Steuereinrichtung, beispielsweise wie oben beschrieben, so ausgebildet sein, dass sie basierend auf Messsignalen des Sensors 9 bestimmt, ob ein Austausch der Fördereinrichtung erforderlich ist. Dazu kann wiederum die oben beschriebene Anzahlverteilung der pro Zeitintervall an ausgebrachten Körnern verwendet werden.

Wenn ein Austausch der Scheibe 16 erforderlich ist, kann dies einer Bedienperson auf einer Anzeigevorrichtung angezeigt werden, insbesondere in Kombination mit einer Empfehlung für die zu verwendende Scheibe 16.

Ein entsprechendes durch die Steuereinrichtung durchführbares Verfahren wird in Figur 6 illustriert.

Wie in Figur 6 gezeigt, beginnt das Verfahren in Schritt 20, bei dem mit dem Sensor 9 die Anzahl der ausgebrachten Körner pro Zeitintervall für mehrere Zeitintervalle detektiert wird.

Basierend auf den Messsignalen des Sensors bestimmt die Steuereinrichtung dann in Schritt 21 eine Verteilung der Körneranzahl und vergleicht diese in Schritt 22 mit einer gewünschten Verteilung. Wiederum kann alternativ bestimmt werden, ob häufiger zu wenig oder zu viele Körner ausgegeben wurden.

Abhängig vom Ergebnis des Schritts 22 bestimmt die Steuereinheit dann in Schritt 23, ob ein Austausch der Fördereinrichtung erforderlich ist oder nicht. Wenn bestimmt wird, dass ein Austausch erforderlich ist, kann die Steuereinheit unter Schritt 24 bestimmen, welche Fördereinrichtung geeigneter ist. Diese kann dann unter Punkt 25 als Empfehlung der Bedienperson über eine Anzeigevorrichtung angezeigt werden.

Wenn die Steuereinrichtung bestimmt, dass ein Austausch nicht erforderlich ist, kann sie ebenfalls in Schritt 26 eine entsprechende Anzeige an die Bedienperson veranlassen.

Die Entscheidung, ob ein Austausch erforderlich ist kann insbesondere basierend auf einem Vergleich der relativen Häufigkeit der Sollstellen mit einem Schwellenwert erfolgen. Der Schwellenwert kann beispielsweise zwischen 90 % und 95 % liegen.

Nachdem die Bedienperson die Fördereinrichtung gemäß der Empfehlung des Schritts 25 getauscht hat, kann das Verfahren der Figur 6 erneut durchgeführt werden, um zu überprüfen, ob bereits die optimale Fördereinrichtung gefunden wurde oder nicht.

Zur Illustration des Verfahrens der Figur 6 soll das folgende konkrete Beispiel dienen. Gemäß diesem Beispiel sollen fünf verschiedene Fördereinrichtungen gemäß Figur 5 bereitgestellt werden, welche mit den Bezeichnungen T1, T2, T3, T4 und T5 versehen sind. Die Fördereinrichtungen weisen eine aufsteigende Größe der Öffnung 17 und damit der resultierenden Tasche auf. T1 soll dabei die kleinste und T5 die größte Öffnung 17 aufweisen.

Zunächst kann die Fördereinrichtung T3 in der Dosiervorrichtung angeordnet werden. Dies ist die Fördereinrichtung mit der mittleren Größe der Öffnung 17.

Wenn die in Schritt 21 bestimmte Verteilung ergibt, dass 85 % Sollstellen, 14 % Fehlstellen und 1 % Doppelstellen vorhanden sind, kann unter Schritt 22 erkannt werden, dass zu viele Fehlstellen vorliegen. Dies kann unter Schritt 23 zu der Entscheidung führen, dass ein Austausch erforderlich ist. Diese Entscheidung kann beispielsweise durch Vergleich der Häufigkeit der Sollstellen mit einem vorherbestimmten Grenzwert erfolgen. Beispielsweise kann der vorherbestimmte Grenzwert 90 % sein. Liegt der Anteil der Sollstellen unter diesem Grenzwert, wie im obigen Fall, ist ein Austausch erforderlich, andernfalls nicht.

Aufgrund der größeren Häufigkeit, mit der zu wenig Körner ausgegeben werden, kann unter Schritt 24 bestimmt werden, dass die Tasche zu klein ist, und daher eine größere Fördereinrichtung verwendet werden sollte. Beispielsweise kann die nächst größere Fördereinrichtung T4 als Empfehlung bestimmt und in Schritt 25 über eine Anzeigevorrichtung angezeigt werden.

Wäre die Verteilung hingegen beispielsweise 65 % Sollstellen, 0 % Fehlstellen und 35 % Doppelstellen wäre die Schlussfolgerung, dass die Öffnung 17 viel zu groß ist. Als Empfehlung könnte daher beispielsweise Fördereinrichtung T1 bestimmt und angezeigt werden.

Die Empfehlung kann also basierend auf dem Absolutwert der Häufigkeit der Fehlstellen oder Mehrfachstellen bestimmt werden. Beispielsweise können bestimmten Wertebereichen bestimmte Fördereinrichtungs-Empfehlungen zugeordnet sein.

Nach Umbau auf die empfohlene Fördereinrichtung kann eine weitere Probe zur Kontrolle gemacht werden, das Verfahren gemäß Figur 6 als erneut durchgeführt werden, um gegebenenfalls eine weitere korrigierte Empfehlung zu bestimmen.

Das Verfahren gemäß Figur 6 kann insbesondere vor dem eigentlichen Ausbringen des granularen Materials durchgeführt werden. Das Verfahren kann aber auch während des Ausbringens des granularen Materials auf einer landschaftlichen Fläche durchgeführt werden.

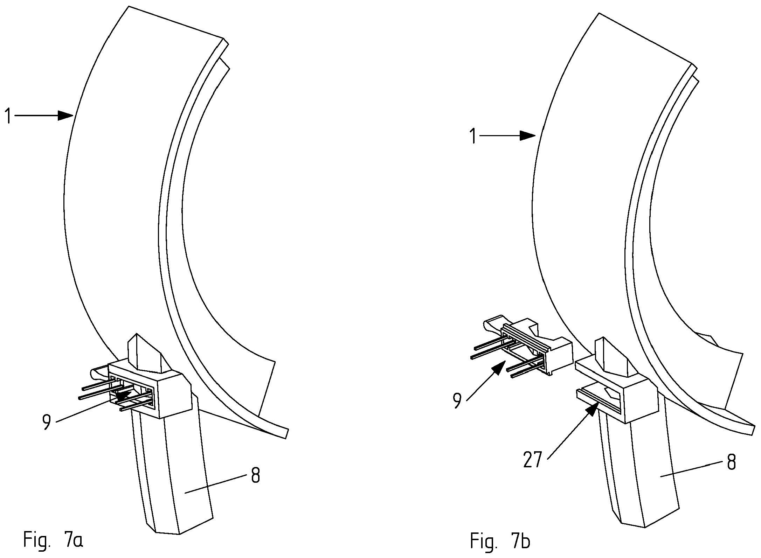

Die Figuren 7A und 7B zeigen in einer perspektivischen Ansicht Teile einer weiteren beispielhaften Dosiervorrichtung. In den beiden Figuren ist das Gehäuse 1 der Dosiervorrichtung angedeutet. Im Bereich einer Auslassöffnung des Gehäuses 1 setzt eine Verbindungsleitung 8 an, welche zu einer nicht gezeigten Abgabeeinrichtung, insbesondere ein Säschar, führt. Die Dosierung innerhalb des Gehäuses 1 kann wie oben beispielsweise in Zusammenhang mit den Figuren 1-3 beschrieben stattfinden.

Die Verbindungsleitung 8 weist eine Krümmung auf, welche in dieselbe Richtung ausgebildet ist, wie die Krümmung des hier nicht gezeigten Führungselements innerhalb des Gehäuses 1. Wenn ein Korn des granularen Materials das Gehäuse 1 nun annähernd tangential verlässt, wird es durch die Fliehkraft an die Innenseite der Verbindungsleitung 8 gedrückt, welche den größeren Krümmungsradius aufweist (also in Bezug auf den Krümmungsmittelpunkt weiter außen liegt), und wird wenigstens abschnittsweise entlang dieser Innenseite auf einer gekrümmten Bahn geführt.

Im Gegensatz zu der Verbindungsleitung 8 der Figuren 1-3 ist die Verbindungsleitung 8 der Figuren 7A und 7B nicht kreiszylindrisch ausgebildet, sondern weist ein konisches oder V-förmiges Profil an der Innenseite mit dem größeren Krümmungsradius auf. Dadurch wird für das Korn des granularen Materials, welches durch die Fliehkraft an diese Seite der Verbindungsleitung 8 gedrückt wird, eine Führungsbahn gebildet, entlang derer sich das Korn bewegt. Dadurch kann wenigstens im Bereich unmittelbar stromabwärts der Auslassöffnung der Bereich, in dem sich die Körner des granularen Materials bewegen, eingeschränkt werden. Die Überwachung der Verbindungsleitung 8 mittels eines Sensors kann daher auf diesen Bereich beschränkt werden.

In Folge ist es möglich, einen einfachen Sensor zu verwenden, beispielsweise in Form eines Optogebers. Der in den Figuren 7A und 7B gezeigte Sensor 9 umfasst eine Gabellichtschranke, welche wenigstens eine Lichtschranke erzeugen kann, die senkrecht zur Bewegungsrichtung des granularen Materials innerhalb der Verbindungsleitung 8 verläuft. Wie insbesondere in Figur 7B zu sehen ist, kann der Sensor 9 seitlich in die Verbindungsleitung 8 eingeschoben werden. Dafür weist die Verbindungsleitung 8 eine entsprechende Sensoraufnahme 27 auf. Dadurch kann eine einfache Austauschbarkeit des Sensors 9 erreicht werden, was beispielsweise zur Reinigung, Wartung, oder Anpassung an unterschiedliches granulares Material vorteilhaft sein kann.

Wie man ebenfalls in Figur 7B erkennt, weist das Gehäuse des Sensors 9 in einem Bereich ein Profil auf, welches dem V-förmigen oder konischen Profil der Verbindungsleitung 8 entspricht. Das Gehäuse des Sensors 9 bildet somit in der Betriebsstellung der Figur 7A einen Teil der Innenwandung der Verbindungsleitung 8. Körner des granularen Materials, die sich entlang dieser Innenwandung bewegen, unterbrechen die Lichtschranke der Gabellichtschranke, was zu einem detektierbaren Signal führt.

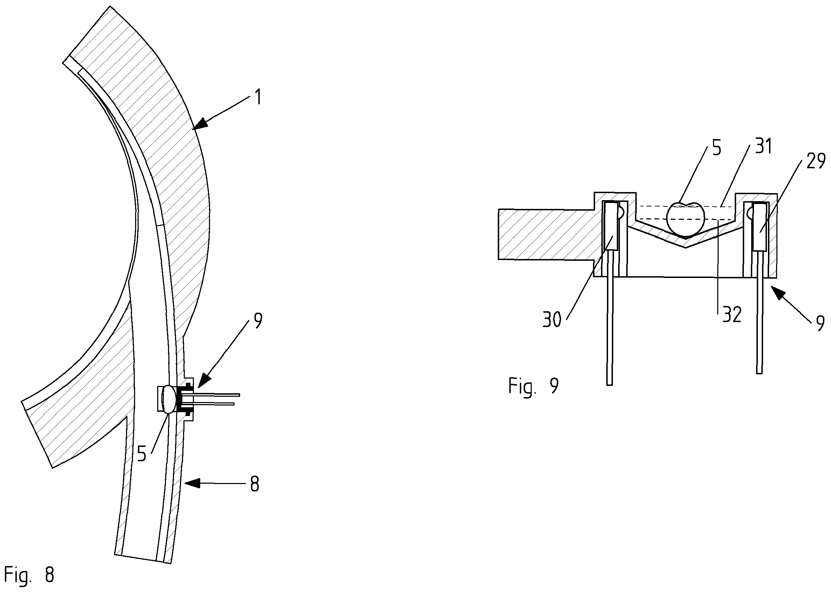

In Figur 8 ist dieses Detektionsprinzip illustriert. Gezeigt ist ein Querschnitt durch die beispielhafte Vorrichtung der Figur 7A. Zusätzlich zum Gehäuse 1, der Verbindungsleitung 8 und dem Sensor 9 ist ein Korn 5 des granularen Materials zu erkennen, welches aufgrund der wirkenden Fliehkraft entlang der Innenseite der Verbindungsleitung 8 geführt wird, an der auch der Sensor 9 angeordnet ist. Wenn das Korn 5 in der gezeigten Position den Sensor 9 passiert, wird die Lichtschranke unterbrochen und das Korn 5 somit erfasst.

Figur 9 zeigt einen Querschnitt durch einen beispielhaften Sensor 9, wie er in den Beispielen der Figuren 7A, 7B und 8 Anwendung finden kann. Dieser Sensor 9 umfasst ein Gehäuse 28, in dem ein Sender 29 und Empfänger 30 einer Gabellichtschranke angeordnet ist. Die Gabellichtschranke erzeugt einen Messbereich mit Grenzbereich 31, 32. Die Gabellichtschranke kann auch zwei Zeilen umfassen welche übereinander angeordnet sind. Dadurch lassen sich sowohl größere als auch kleinere Körner 5 von granularem Material zuverlässig detektieren. Wie man der Figur 9 entnehmen kann, weist das Gehäuse 28 einen V-förmig profilierten Bereich auf, welcher mit einem entsprechenden Bereich der Innenwandung einer Verbindungsleitung 8 korrespondiert und damit einen Teil einer Führungsbahn für Körner 5 des granularen Materials innerhalb der Verbindungsleitung bildet.

Wenn der Sender 29 und der Empfänger 30 nicht vorgesehen sind, kann ein Sensor-Dummy bereitgestellt werden, der für einen Betrieb der Dosiervorrichtung ohne Sensor bereitgestellt werden kann. Zu einem späteren Zeitpunkt kann dieser Sensor-Dummy einfach durch einen funktionalen Sensor 9 ersetzt werden.

Es versteht sich, dass in den zuvor beschriebenen Ausführungsbeispielen genannte Merkmale nicht auf diese speziellen Kombinationen beschränkt sind und auch in beliebigen anderen Kombinationen möglich sind.

## Patentansprüche

1. Vereinzelungsvorrichtung für granulares Material, insbesondere Saatgut, wobei die Vereinzelungsvorrichtung eine in einem Gehäuse (1) drehbar gelagerte Fördereinrichtung (2) umfasst, die granulares Material von einem Aufnahmebereich (6) in einen Abgabebereich fördert und mit einer Gehäusewandung oder einem Führungselement (3) so zusammenwirkt, dass die Anzahl der geförderten Körner (5) des granularen Materials vom Aufnahmebereich (6) zum Abgabebereich hin abnimmt,
wobei im Abgabebereich eine Auslassöffnung angeordnet ist, über die ein durch die Fördereinrichtung (2) in den Abgabebereich gefördertes Korn (5) des granularen Materials aus dem Gehäuse (1) ausgeschleust und an eine Abgabeeinrichtung weitergeleitet werden kann, wobei die Vereinzelungsvorrichtung einen Sensor (9) umfasst, mit dem die Anzahl der Körner (5) des granularen Materials bestimmbar ist, die über die Auslassöffnung aus dem Gehäuse (1) ausgeschleust und an die Abgabeeinrichtung weitergeleitet werden;
wobei ein Messsignal des Sensors (9) an eine Steuereinrichtung übermittelbar ist, und wobei die Steuereinrichtung so ausgebildet ist, dass sie die Drehzahl der Fördereinrichtung (2) basierend auf dem Messsignal steuert oder regelt; und
**dadurch gekennzeichnet, dass** der Sensor (9) so ausgebildet ist, dass die Anzahl der innerhalb eines bestimmten Zeitintervalls ausgeschleusten Körner (5) für eine Vielzahl von Zeitintervallen bestimmbar ist, und wobei die Steuereinrichtung so ausgebildet ist, dass sie eine auf Basis von Messsignalen des Sensors (9) bestimmte Verteilung der Anzahl der von der Vereinzelungsvorrichtung je Zeitintervall abgegebenen Körner (5) verwendet, um die Drehzahl der Fördereinrichtung (2) zu steuern oder zu regeln.

2. Vereinzelungsvorrichtung nach Anspruch 1, wobei die Fördereinrichtung (2) zur Anpassung an unterschiedliche Korngrößen ganz oder teilweise austauschbar ist, wobei ein Messsignal des Sensors (9) an eine Steuereinrichtung übermittelbar ist, und wobei die Steuereinrichtung so ausgebildet ist, dass sie basierend auf dem Messsignal bestimmt, ob ein Austausch der Fördereinrichtung (2) erforderlich ist.

3. Vereinzelungsvorrichtung nach Anspruch 2, wobei die Steuereinrichtung so ausgebildet ist, dass sie bestimmt, welche von mehreren möglichen Fördereinrichtungen (2) verwendet werden soll, wenn sie bestimmt, dass ein Austausch der Fördereinrichtung (2) erforderlich ist.

4. Vereinzelungsvorrichtung nach Anspruch 3, wobei die Steuereinrichtung so ausgebildet ist, dass sie ein Anzeigesignal an eine Anzeigevorrichtung zur Anzeige der zu verwendenden Fördereinrichtung (2) erzeugt und an die Anzeigevorrichtung übermittelt.

5. Vereinzelungsvorrichtung nach einem der vorangegangenen Ansprüche, umfassend eine Verbindungsleitung (8), welche das Gehäuse (1) mit einem Säschar verbindet, wobei der Sensor (9) im Bereich der Mündung der Verbindungsleitung (8) zum Säschar angeordnet ist.

6. Vereinzelungsvorrichtung nach einem der vorangegangenen Ansprüche, wobei ein Messsignal des Sensors (9) an eine Steuereinrichtung übermittelbar ist, und wobei die Steuereinrichtung so ausgebildet ist, dass sie basierend auf dem Messsignal des Sensors (9) einen Fehlerzustand der Vereinzelungsvorrichtung erkennt.

7. Vereinzelungsvorrichtung nach einem der vorangegangenen Ansprüche, wobei der Sensor (9) eine Gabellichtschranke umfasst und im oberen Drittel, insbesondere im oberen Viertel, einer Verbindungsleitung (8), welche das Gehäuse (1) mit der Abgabeeinrichtung verbindet, angeordnet ist.

8. Vereinzelungsvorrichtung nach Anspruch 7, wobei der Sensor zerstörungsfrei lösbar mit der Verbindungsleitung (8) verbunden, insbesondere in eine entsprechende Aufnahmeöffnung (27) in der Verbindungsleitung (8) einschiebbar, ist.

9. Vereinzelungsvorrichtung nach Anspruch 7 oder 8, wobei ein Teil eines Gehäuses (28) des Sensors (9) einen Teil der Innenwandung der Verbindungsleitung (8) bildet.

10. Verfahren zum Dosieren von granularem Material, insbesondere Saatgut, mit einer Vereinzelungsvorrichtung, die eine in einem Gehäuse (1) drehbar gelagerte Fördereinrichtung (2) umfasst, die granulares Material von einem Aufnahmebereich (6) in einen Abgabebereich fördert und mit einer Gehäusewandung oder einem Führungselement (3) so zusammenwirkt, dass die Anzahl der geförderten Körner (5) des granularen Materials vom Aufnahmebereich (6) zum Abgabebereich hin abnimmt, wobei im Abgabebereich eine Auslassöffnung angeordnet ist, über die ein durch die Fördereinrichtung (2) in den Abgabebereich gefördertes Korn (5) des granularen Materials aus dem Gehäuse (1) ausgeschleust und an eine Abgabeeinrichtung weitergeleitet werden kann,
wobei eine Anzahl von Körnern (5) des granularen Materials, die über die Auslassöffnung aus dem Gehäuse (1) ausgeschleust und an die Abgabeeinrichtung weitergeleitet werden, mit Hilfe eines Sensors (9) bestimmt wird, wobei ein Messsignal des Sensors (9) an eine Steuereinrichtung übermittelt wird, und wobei die Steuereinrichtung die Drehzahl der Fördereinrichtung (2) basierend auf dem Messsignal steuert oder regelt;
**dadurch gekennzeichnet, dass** der Sensor (9) die Anzahl der innerhalb eines bestimmten Zeitintervalls ausgeschleusten Körner (5) für eine Vielzahl von Zeitintervallen bestimmt, und wobei die Steuereinrichtung eine auf Basis von Messsignalen des Sensors (9) bestimmte Verteilung der Anzahl der von der Vereinzelungsvorrichtung je Zeitintervall abgegebenen Körner (5) verwendet, um die Drehzahl der Fördereinrichtung (2) zu steuern oder zu regeln.

11. Sämaschine umfassend eine Vereinzelungsvorrichtung nach einem der Ansprüche 1 - 9.

## Claims

1. Singling apparatus for granular material, in particular seed, wherein the singling apparatus comprises a conveying device (2) mounted in a rotatable manner in a housing (1), said conveying device (2) conveying granular material from a receiving region (6) into a dispensing region and cooperating with a housing wall or a guide element (3) such that the number of conveyed grains (5) of the granular material decreases from the receiving region (6) to the dispensing region, wherein, in the dispensing region, an outlet opening is arranged, via which a grain (5) of the granular material that is conveyed by the conveying device (2) into the dispensing region can be discharged from the housing (1) and can be transferred to a dispensing device,
wherein the singling apparatus comprises a sensor (9), with which the number of grains (5) of the granular material that are discharged from the housing (1) and transferred to the dispensing device is able to be determined;
wherein a measurement signal of the sensor (9) is able to be transmitted to a control device, and wherein the control device is configured such that it controls or regulates the rotational speed of the conveying device (2) on the basis of the measurement signal; and **characterized in that** the sensor (9) is configured such that the number of grains (5) discharged within a particular time period is able to be determined for a multiplicity of time periods, and wherein the control device is configured such that it uses a distribution, determined on the basis of measurement signals of the sensor (9), of the number of grains (5) dispensed by the singling apparatus per time period to control or regulate the rotational speed of the conveying device (2).

2. Singling apparatus according to Claim 1, wherein the conveying device (2) is entirely or partially exchangeable for adaptation to different grain sizes, wherein a measurement signal of the sensor (9) is able to be transmitted to a control device, and wherein the control device is configured such that, on the basis of the measurement signal, it determines whether it is necessary to exchange the conveying device (2).

3. Singling apparatus according to Claim 2, wherein the control device is configured such that it determines which of a plurality of possible conveying devices (2) is intended to be used when it determines that it is necessary to exchange the conveying device (2) .

4. Singling apparatus according to Claim 3, wherein the control device is configured such that it generates a display signal to a display apparatus for displaying the conveying device (2) to be used and transmits it to the display apparatus.

5. Singling apparatus according to one of the preceding claims, comprising a connecting line (8) that connects the housing (1) to a sowing coulter, wherein the sensor (9) is arranged in the region of the orifice of the connecting line (8) to the sowing coulter.

6. Singling apparatus according to one of the preceding claims, wherein a measurement signal of the sensor (9) is able to be transmitted to a control device, and wherein the control device is configured such that, on the basis of the measurement signal of the sensor (9), it identifies a defective state of the singling apparatus.

7. Singling apparatus according to one of the preceding claims, wherein the sensor (9) comprises a forked light barrier and is arranged in the upper third, in particular in the upper quarter, of a connecting line (8) that connects the housing (1) to the dispensing device.

8. Singling apparatus according to Claim 7, wherein the sensor is connected to the connecting line (8), in particular introducible into a corresponding receiving opening (27) in the connecting line (8), in a non-destructively releasable manner.

9. Singling apparatus according to Claim 7 or 8, wherein a part of a housing (28) of the sensor (9) forms a part of the inner wall of the connecting line (8) .

10. Method for metering granular material, in particular seed, using a singling apparatus that comprises a conveying device (2) mounted in a rotatable manner in a housing (1), said conveying device (2) conveying granular material from a receiving region (6) into a dispensing region and cooperating with a housing wall or a guide element (3) such that the number of conveyed grains (5) of the granular material decreases from the receiving region (6) to the dispensing region, wherein, in the dispensing region, an outlet opening is arranged, via which a grain (5) of the granular material that is conveyed by the conveying device (2) into the dispensing region can be discharged from the housing (1) and can be transferred to a dispensing device,
wherein a number of grains (5) of the granular material that are discharged from the housing (1) via the outlet opening and transferred to the dispensing device is determined with the aid of a sensor (9), wherein a measurement signal of the sensor (9) is transmitted to a control device, and wherein the control device controls or regulates the rotational speed of the conveying device (2) on the basis of the measurement signal;
**characterized in that**
the sensor (9) determines the number of grains (5) discharged within a particular time period for a multiplicity of time periods, and wherein the control device uses a distribution, determined on the basis of measurement signals of the sensor (9), of the number of grains (5) dispensed by the singling apparatus per time period to control or regulate the rotational speed of the conveying device (2).

11. Seed drill comprising a singling apparatus according to one of Claims 1-9.

## Revendications

1. Dispositif de séparation de matériau granulaire, en particulier de semences, le dispositif de séparation comprenant un moyen de transport (2) qui est monté de manière rotative dans un boîtier (1), qui transporte le matériau granulaire d'une zone de réception (6) jusque dans une zone de distribution et qui coopère avec une paroi de boîtier ou un élément de guidage (3) de sorte que le nombre de grains transportés (5) du matériau granulaire diminue de la zone de réception (6) à la zone de distribution,
une ouverture de sortie étant ménagée dans la zone de distribution et permettant de délivrer en sortie du boîtier (1) un grain (5) du matériau granulaire, qui a été transporté jusque dans la zone de distribution par le moyen de transport (2), et de l'acheminer jusqu'à un moyen de distribution,
le dispositif de séparation comprenant un capteur (9) permettant de déterminer le nombre de grains (5) du matériau granulaire qui sont délivrés en sortie du boîtier (1) par l'ouverture de sortie et qui sont acheminés jusqu'au moyen de distribution ;
un signal de mesure du capteur (9) pouvant être transmis à un moyen de commande, et le moyen de commande étant conçu de façon à commander ou réguler la vitesse de rotation du moyen de transport (2) sur la base du signal de mesure ; et
**caractérisé en ce que**
le capteur (9) est conçu de façon à pouvoir déterminer le nombre de grains (5) délivrés en sortie pendant un intervalle de temps déterminé pour un grand nombre d'intervalles de temps, et
le moyen de commande est conçu de façon à utiliser une distribution du nombre de grains (5), distribués par le dispositif de séparation pour chaque intervalle de temps, pour commander ou réguler la vitesse de rotation du moyen de transport (2), laquelle distribution est déterminée sur la base des signaux de mesure du capteur (9) .

2. Dispositif de séparation selon la revendication 1, le moyen de transport (2) étant totalement ou partiellement remplaçable de façon à s'adapter à différentes tailles de grains, un signal de mesure du capteur (9) pouvant être transmis à un moyen de commande, et le moyen de commande étant conçu de façon à déterminer sur la base du signal de mesure si un remplacement du moyen de transport (2) est nécessaire.

3. Dispositif de séparation selon la revendication 2, le moyen de commande étant conçu de façon à déterminer lequel parmi une pluralité de moyens de transport possibles (2) doit être utilisé s'il détermine qu'un remplacement du moyen de transport (2) est nécessaire.

4. Dispositif de séparation selon la revendication 3, le moyen de commande étant conçu de façon à générer un signal d'affichage à destination d'un dispositif d'affichage pour afficher le moyen de transport (2) à utiliser et à le transmettre au dispositif d'affichage.

5. Dispositif de séparation selon l'une des revendications précédentes, comprenant un conduit de liaison (8) qui relie le boîtier (1) à un soc d'ensemencement, le capteur (9) étant disposé au niveau de l'embouchure du conduit de liaison (8) menant au soc d'ensemencement.

6. Dispositif de séparation selon l'une des revendications précédentes, un signal de mesure du capteur (9) pouvant être transmis à un moyen de commande, et le moyen de commande étant conçu de façon à détecter un état d'erreur du dispositif de séparation sur la base du signal de mesure du capteur (9).

7. Dispositif de séparation selon l'une des revendications précédentes, le capteur (9) comprenant une barrière lumineuse fourchue et étant disposé dans le tiers supérieur, en particulier dans le quart supérieur, d'un conduit de liaison (8) qui relie le boîtier (1) au moyen de distribution.

8. Dispositif de séparation selon la revendication 7, le capteur étant relié de manière amovible et non destructrice au conduit de liaison (8), en particulier de manière à pouvoir être inséré dans une ouverture de réception correspondante (27) ménagée dans le conduit de liaison (8).

9. Dispositif de séparation selon la revendication 7 ou 8, une partie d'un boîtier (28) du capteur (9) formant une partie de la paroi intérieure du conduit de liaison (8).

10. Procédé de dosage de matériau granulaire, en particulier de semences, à l'aide d'un dispositif de séparation qui comprend un moyen de transport (2) qui est monté de manière rotative dans un boîtier (1), qui transporte le matériau granulaire d'une zone de réception (6) jusque dans une zone de distribution et qui coopère avec une paroi de boîtier ou un élément de guidage (3) de telle sorte que le nombre de grains transportés (5) du matériau granulaire diminue de la zone de réception (6) jusqu'à la zone de distribution, une ouverture de sortie étant ménagée dans la zone de distribution et permettant de délivrer en sortie du boîtier (1) un grain (5) du matériau granulaire, qui a été transporté jusque dans la zone de distribution par le moyen de transport (2), et de l'acheminer jusqu'à un moyen de distribution,
le nombre de grains (5) du matériau granulaire, qui sont délivrés en sortie du boîtier (1) et acheminés au moyen de distribution, étant déterminé à l'aide d'un capteur (9), un signal de mesure du capteur (9) pouvant être transmis à un moyen de commande, et le moyen de commande étant conçu de façon à commander ou réguler la vitesse de rotation du moyen de transport (2) sur la base du signal de mesure ;
**caractérisé en ce que**
le capteur (9) détermine le nombre de grains (5) délivrés en sortie pendant un intervalle de temps déterminé pour un grand nombre d'intervalles de temps, et le moyen de commande utilise une distribution du nombre de grains (5), distribués par le dispositif de séparation pour chaque intervalle de temps, pour commander ou réguler la vitesse de rotation du moyen de transport (2), laquelle distribution est déterminée sur la base des signaux de mesure du capteur (9).

11. Semoir comprenant un dispositif de séparation selon l'une des revendications 1 à 9.
